# EUROPÄISCHE PATENTSCHRIFT

(11) **EP 2 189 633 B1**
(45) Veröffentlichungstag und Bekanntmachung des Hinweises auf die Patenterteilung: **02.11.2011**
(21) Anmeldenummer: 08020355.7
(22) Anmeldetag: 22.11.2008
(51) Int. Cl.: F01N 13/18, F01N 3/20

(54) **Vorrichtung zum Austrag von Harnstofflösung in eine Abgasleitung**
Device to discharge urine solution in a waste gas line
Dispositif destiné à l'élimination d'une solution d'urée dans une conduite de gaz d'échappement

(43) Veröffentlichungstag der Anmeldung: 26.05.2010
(73) Patentinhaber: Grundfos Management A/S, 8850 Bjerringbro (DK)
(72) Erfinder: Diouf, Cheikh, 57950 Montigny les Metz (FR); Supernat, Frédéric, 57260 Dieuze (FR); Maguin, Georges, 57530 Ars Laquenexy (FR); Gammelgaard, John Jessen, 8600 Silkeborg (DK)
(74) Vertreter: Vollmann, Heiko

(56) Entgegenhaltungen:
- WO-A-2008/080695
- WO-A-2008/121319
- DE-A1-102006 061 733

## Beschreibung

Die Erfindung betrifft eine Vorrichtung zum Austrag von Harnstofflösung in eine Abgasleitung.

Vorrichtungen dieser Art werden unter anderem bei Kraftfahrzeugen und insbesondere bei Nutzfahrzeugen, die von einem Dieselmotor angetrieben werden, verwendet, um die Stickoxidemissionen dieser Motoren zu senken. Hierzu wird dem von dem Motor kommenden Abgasstrom vor Eintritt in einem in der Abgasleitung angeordneten Katalysator ein Reduktionsmittel zum Abbau der Stickoxide zugeführt. Bei dem Reduktionsmittel handelt es sich in der Regel um eine wässrige Harnstofflösung, die in den Abgasstrom eingespritzt wird und dort die Stickoxide in Stickstoff und Wasserstoff umwandelt.

Eine solche Vorrichtung ist aus WO 2008/080695 A1 bekannt. Diese Vorrichtung weist eine Einspritzdüse zum Einbringen einer Harnstofflösung in eine Abgasleitung auf. Des Weiteren umfasst die Vorrichtung einen Flansch, der eine an der Abgasleitungswandung ausgebildete Durchbrechung umgibt. Ein Düsenkopf der Einspritzdüse wird an dem Flansch außen zur Anlage gebracht und die Einspritzdüse in dieser Position mit einer Schelle an dem Flansch befestigt.

Der vorliegenden Erfindung liegt die Aufgabe zugrunde, eine solche Vorrichtung zu schaffen, mit der Harnstofflösung zuverlässig in eine Abgasleitung eingebracht werden kann, wobei die Vorrichtung einfach herstellbar und in einfacher Weise in einem Kraftfahrzeug montierbar sein soll. Darüber hinaus ist es eine weitere Aufgabe der Erfindung, ein schnelles und einfaches Montageverfahren für eine Einspritzdüse einer solchen Vorrichtung zu schaffen.

Der die Vorrichtung betreffende Teil dieser Aufgabe wird durch eine Vorrichtung mit den in Anspruch 1 angegebenen Merkmalen gelöst, während der verfahrensmäßige Teil durch das Verfahren zur Montage einer Einspritzdüse mit den in Anspruch 19 angegebenen Merkmalen gelöst wird. Vorteilhafte Weiterbildungen der Erfindung ergeben sich aus den Unteransprüchen, der nachfolgenden Beschreibung sowie der Zeichnung.

Die erfindungsgemäße Vorrichtung zum Austrag von Harnstofflösung in eine Abgasleitung weist eine Einspritzdüse auf, an der ein Leitungsanschluss für die Zufuhr von Harnstofflösung vorgesehen ist. Mittels einer einströmseitig der Einspritzdüse angeordneten Pumpe kann die Harnstofflösung der Einspritzdüse vorzugsweise von der Motorsteuerung gesteuert zugeführt werden. Bei der Pumpe kann es sich um eine kontinuierlich fördernde Pumpe handeln, wobei in diesem Fall zur Steuerung der Zufuhr von Harnstofflösung typischerweise ein steuerbares Ventil vorgesehen ist. Dieses Ventil kann eingangsseitig der Einspritzdüse angeordnet sein oder die Einspritzdüse selbst kann einen beispielsweise eiektromagnetisch oder elektrisch ansteuerbaren Schließkörper aufweisen, der eine Ventilfunktion ausübt. Bevorzugt ist zur Förderung der Harnstofflösung allerdings eine ansteuerbare Dosierpumpe vorgesehen, die einen rein mechanischen Aufbau der Einspritzdüse ohne elektrische Bauteile ermöglicht.

Um die Harnstofflösung einem Abgasstrom fein verteilt zuführen zu können, weist die erfindungsgemäße Einspritzdüse einen Düsenkopf auf, der mit dem Leitungsanschluss für die Zufuhr von Harnstofflösung leitungsverbunden ist. An diesem Düsenkopf ist mindestens eine bzw. sind vorzugsweise zwei Auslassöffnungen mit, sich kreuzenden Strahlrichtungen ausgebildet, die derart ausgebildet und angeordnet sind, dass die Harnstofflösung feinst verteilt im Wesentlichen über den gesamten Leitungsquerschnitt einer Abgasleitung in den Abgasstrom eingebracht werden kann.

Zur lösbaren Befestigung der Einspritzdüse an der Abgasleitung sieht die Erfindung eine Aufnahme für die Einspritzdüse vor. Die Aufnahme ist so an der Außenseite der Abgasleitung angeordnet, dass sie eine Durchbrechung in der Abgasleitungswandung teilweise oder vollständig umgibt. Über die Durchbrechung in der Abgasleitungswandung wird die Harnstofflösung von der in der Aufnahme angeordneten Einspritzdüse in die Abgasleitung ausgetragen, wobei die Einspritzdüse, wie alle übrigen Bestandteile der erfindungsgemäßen Vorrichtung, außerhalb der Abgasleitung angeordnet ist. Insofern ermöglicht dies eine einfache Montage der erfindungsgemäßen Vorrichtung in einem Kraftfahrzeug. Darüber hinaus ist die Einspritzdüse bei dieser Anordnung außerhalb der Abgasleitung im Gegensatz zu einer in die Abgasleitung eingreifenden Einspritzdüse einer erheblich geringeren thermischen Belastung ausgesetzt, was die Gefahr einer hierdurch bedingten Beschädigung der Einspritzdüse und insbesondere die Gefahr einer Auskristallisation des Harnstoffs in der Einspritzdüse und eine dadurch verursachte Verstopfung der Einspritzdüse verringert.

Um eine Leckage der Harnstofflösung zwischen der Einspritzdüse und der Abgasleitung, d.h. außerhalb der Abgasleitung, zu verhindern, ist die Aufnahme zur dichten Anlage des Düsenkopfes der Einspritzdüse ausgebildet, wobei die Anlage des Düsenkopfes in der Aufnahme erfindungsgemäß kraftschlüssig mittels Federmitteln erfolgt. Hierbei gewährleisten die Federmittel in vorteilhafter Weise auch bei Erschütterungen oder Vibrationen der Abgasleitung, wie sie beim Betrieb eines Kraftfahrzeugs in der Regel vorkommen, eine dichte Anlage des Düsenkopfes an der fest an der Abgasleitung angeordneten Aufnahme, sodass die Harnstofflösung nicht durch eine unbeabsichtigte Trennung des Düsenkopfes von der Aufnahme außerhalb der Abgasleitung ausströmen kann.

Die zur Erzeugung des Kraftschlusses zwischen dem Düsenkopf und der Aufnahme verwendeten Federmittel können sowohl separate Federelemente sein als auch direkt an der Einspritzdüse befestigt sein. Bevorzugt werden allerdings lose Federmittel vermieden, um die Montage der Einspritzdüse an der Aufnahme zu vereinfachen. Aus diesem Grund ist vorteilhafter Weise vorgesehen, dass die Federmittel integraler Bestandteil der Einspritzdüse sind.

Die Art des Federelements ist grundsätzlich beliebig, wobei das Federelement sowohl fest oder verschiebbar an dem Gehäuse angeordnet sein kann. Bei einer vorteilhaften Ausgestaltung der erfindungsgemäßen Einspritzdüse stützt sich das Federelement zwischen einem an dem Gehäuse verschiebbar angeordneten Anlageteil und einer an dem Düsenkopf ausgebildeten Anlagefläche ab. Hierbei ist vorzugsweise eine Schraubenfeder vorgesehen, die um das Gehäuse außen umgebend angeordnet ist, wobei sowohl der Düsenkopf als auch das an dem Gehäuse angeordnete Anlageteil über den Gehduseabschnift, um den die Schraubenfeder angeordnet ist, radial hinausragt. Dieser hinausragende Teil des Anlageteils und des Düsenkopfs bilden dann jeweils eine Anlagefläche für die Schraubenfeder.

Bevorzugt weist die Einspritzdüse ein zentrales in einem Gehäuse begrenzt beweglich geführtes Rohr auf, an dessen einen Rohrende der Düsenkopf angeordnet ist. Dieses Rohr dient zur Zufuhr der Harnstofflösung zu dem Düsenkopf, bildet also einen Kanal zu dem Düsenkopf. Das an dem Gehäuse verschiebbar angeordnete Anlageteil ist bei dieser Ausgestaltung formschlüssig in oder an der Aufnahme befestigt, wobei sich zwischen ihm und dem Düsenkopf eine Feder abstützt. Zweckmäßigerweise erfolgt hierbei die Befestigung des Anlageteils an der Aufnahme derart, dass der Düsenkopf in der Aufnahme unter Spannung des Federelements zur Anlage kommt. Des Weiteren sind die zur formschlüssigen Befestigung des Anlageteils an der Aufnahme erforderlichen Mittel bevorzugt so ausgebildet, dass nicht nur eine Trennung des Gehäuses von der Aufnahme verhindert wird, sondern dass mit diesen Mitteln vorzugsweise auch einer Drehung des Gehäuses und damit der gesamten Einspritzdüse relativ zu der Aufnahme entgegengewirkt wird. Die eine Drehung des Gehäuses verhindernden Formschlussmittel ermöglichen es darüber hinaus auch, die Einspritzdüse derart definiert an der Abgasleitung zu positionieren, dass mit ihr Harnstofflösung im Wesentlichen über den gesamten Innenquerschnitt der Abgasleitung verteilt in diese eingebracht werden kann. Die Feder kann vorteilhaft eine Druckfeder sein, die den Düsenkopf in der Aufnahme dicht in seine Anlageposition drückt und ihn unabhängig von Bewegungen der Abgasleitung bzw. der daran befestigten Aufnahme in der Aufnahmeposition hält.

Bevorzugt weist der Düsenkopf ein Bauteil mit zumindest einem daran ausgebildeten Auslasskanal auf, wobei sich dieses Bauteil über den Außendurchmessers des Gehäuses erstrecken und die Anlagefläche für die Feder bilden kann. Dies ist insofern vorteilhaft, als hierdurch eine besonders platzsparende Anordnung des Federelements möglich ist, bei der sich das Federelement bzw. die Schraubenfeder bevorzugt nicht über den Außenumfang des Düsenkopfs hinaus erstreckt. Weiter vorteilhaft kann die Aufnahme für die Einspritzdüse einen bevorzugt zylindrischen Hohlraum aufweisen, der eine Führung für den Gehöuseabschnitt mit der dort herum angeordneten Schraubenfeder und den Düsenkopf bildet.

Das Anlageteil kann vorteilhaft von einem im Wesentlichen flachen Ringelement gebildet werden, das auch zur Befestigung des Gehäuses an der Aufnahme vorgesehen ist. Das Ringelement ist zweckmäßigerweise so an dem Gehäuse angeordnet, dass es das Gehäuse lose umgibt und dort auf diese Weise verschiebbar ist.

Bei einer weiteren vorteilhaften Ausgestaltung der erfindungsgemäßen Einspritzdüse kann sich die Feder auch zwischen dem Anlageteil und einer an der Einspritzdüse feststehend ausgebildeten Anlagefläche abstützen. In diesem Fall kann die Anlagefläche für die Feder direkt an dem Gehäuse der Einspritzdüse ausgebildet sein oder von einem an dem Gehäuse befestigten Bauteil, vorzugsweise von einem dort befestigten Sicherungsring gebildet werden. Dies hat den Vorteil, dass der Düsenkopf nicht belastet wird, da er nicht mit der Kraft der gespannten Feder beaufschlagt wird.

Zwar ist die thermische Belastung der Einspritzdüse der erfindungsgemäßen Vorrichtung im Vergleich zu einer in die Abgasleitung eingreifenden Düse geringer, dennoch ist auch sie direkt außenseitig der Abgasleitung verhältnismäßig hohen Temperaturen ausgesetzt. Damit diese Temperaturen nicht zu einer Auskristallisation des Harnstoffs in der Einspritzdüse führen, ist das Gehäuse vorteilhaft als Kühlkörper ausgebildet. Dementsprechend ist das Material und die Gestalt des Gehäuses bevorzugt derart, dass die von dem Gehäuse im Bereich der Abgasleitung aufgenommene Wärme schnell und in ausreichendem Maße an die die Einspritzdüse umgebende Luft abgegeben werden kann. So kann das Gehäuse beispielsweise ein Aluminiumdruckgussteil oder ein Leichtmetallgussteil sein, an dem zur Vergrößerung der Wärme abgebenden Oberfläche zweckmäßigerweise Kühlrippen ausgebildet sind. Daneben ist es typischerweise auch möglich, in dem Gehäuse eine Flüssigkeitskühlung vorzusehen, über die die Wärme aus dem Gehäuse abgeführt werden kann.

Typischerweise ist der direkt mit dem Abgasstrom kommunizierende Düsenkopf einer besonders großen thermischen Belastung ausgesetzt. Um die Wärme aus dem Düsenkopf ableiten zu können, ist bevorzugt eine Ausgestaltung der Einspritzdüse vorgesehen, bei der eine Stirnseite des zylindrischen Abschnitts des Gehäuses der Einspritzdüse bei Anordnung der Einspritzdüse in der Aufnahme an dem Düsenkopf anliegt, sodass die von dem Düsenkopf aufgenommene Wärme direkt in das Gehäuse und von dort bevorzugt in die Umgebungsluft abgeleitet werden kann.

Um die Wärmeableitung von dem Düsenkopf zu dem als Kühlkörper ausgebildeten Gehäuse sicherstellen zu können, ist vorteilhaft eine Feder zum kraftschlüssigen Anlegen des Gehäuses an dem Düsenkopf vorgesehen. Diese Feder ist vorzugsweise in dem Gehäuse der Einspritzdüse angeordnet.

So sieht eine weitere bevorzugte Ausgestaltung der Einspritzdüse vor, dass in dem Gehäuse der Einspritzdüse eine absatzförmige Erweiterung zur Anordnung der Anschlussaufnahme ausgebildet ist, wobei zwischen der Anschlussaufnahme und dem Absatz der Erweiterung die das Rohr umgebende Feder angeordnet ist. Derart angeordnet drückt die Feder das Gehäuse gegen den Düsenkopf, bildet also eine Wärmebrücke von dem Düsenkopf zu dem Gehäuse. Wegen der vergleichsweise geringen zu realisierenden Federwege kann die Feder beispielsweise als Tellerfeder ausgebildet sein. Bevorzugt ist aber eine Ausbildung der Feder als Schraubenfeder.

Bei einer weiteren vorteilhaften Ausgestaltung der erfindungsgemäßen Einspritzdüse stützt sich ein Federelement an dem Gehäuse der Einspritzdüse und an der Aufnahme für die Einspritzdüse ab. Dementsprechend ist an der Einspritzdüse allenfalls eine Anlagefläche für das Federelement vorzusehen. Besonders vorteilhaft kann auch auf diese eine Anlagefläche verzichtet werden, wenn, wie es in diesem Zusammenhang bevorzugt vorgesehen ist, das Ringelement federnd ausgebildet ist und an dem Gehäuse der Einspritzdüse festgelegt ist. D.h., das Ringelement wird bei dieser Weiterbildung nicht nur zur Bildung eines Formschlusses sondern auch zur Bildung eines Kraftschlusses mit der Aufnahme verwendet. Zu diesem Zweck kann das Ringelement ähnlich einer Tellerfeder ausgebildet sein.

Korrespondierend zu dem Ringelement kann vorteilhaft an der Aufnahme eine Art Flansch ausgebildet sein, an dem das Ringelement zur Anlage gebracht' werden kann, wobei das Ringelement und der Flansch mittels einer das Ringelement und den Flansch umgreifenden Schelle miteinander vorzugsweise form- und kraftschlüssig befestigt werden. Hierbei ist das Ringelement an dem Gehäuse zweckmäßigerweise derart angeordnet, dass es dann, wenn der Düsenkopf in der Aufnahme an der dafür vorgesehenen Position außenseitig der an der Abgasleitungswandung ausgebildeten Durchbrechung zur Anlage kommt, ebenfalls an der Aufnahme und zwar an dem an der Aufnahme ausgebildeten Flansch anliegt und an dem Flansch befestigt werden kann.

Die bevorzugt zur Befestigung des Ringelements an dem Flansch der Aufnahme vorgesehene Schelle ist im Gegensatz zu einer üblichen Schlauchschelle vorteilhafter Weise so ausgebildet, dass sie das Ringelement und den Flansch nicht nur umfänglich sondern auch an den voneinander abgewandten Flachseiten im Wesentlichen spielfrei umgreift. Hierzu weist die Schelle zweckmäßig an ihrer Innenseite eine entsprechend dimensionierte Nut auf. Die Schelle ermöglicht eine schnelle und einfache Befestigung der Einspritzdüse in der Aufnahme, wobei der Düsenkopf in der Aufnahme durch das Federelement an der dafür vorgesehenen Position dicht zur Anlage gebracht wird, ohne die Einspritzdüse hierfür besonders ausrichten zu müssen.

Alternativ kann zur Befestigung der Einspritzdüse an der Aufnahme ggf. auch ein Bajonettverschluss vorgesehen sein; der bevorzugt derart ausgebildet ist, dass die Einspritzdüse zweistufig befestigbar ist, wobei sie in einer ersten Verschlussstellung lediglich nicht verlierbar an der Aufnahme fixiert wird und in einer zweiten Verschlussstellung wie zuvor federvorgespannt befestigt wird. Während der Fixiervorgang gegebenenfalls ohne Werkzeug erfolgen kann, kann es erforderlich sein, den Verspannvorgang unter Zuhilfenahme von Werkzeug vorzunehmen. Der zweistufige Befestigungsvorgang ist besonders vorteilhaft, da bei dem Verspannen der Einspritzdüse diese nicht gehalten werden muss, so dass zum Verspannen beide Hände zur Verfügung stehen. Dies ist insbesondere bei Wartungsarbeiten während des Betriebs eines Kraftfahrzeugs von Vorteil.

Um einen Wärmeübergang von dem Gehäuse auf das darin zentral geführte Rohr zu verhindern, ist das Rohr bevorzugt mit dem Gehäuse im Bereich des Düsenkopfs wärmeleitend verbunden und im übrigen Bereich von dem Gehäuse beabstandet. Diese Ausgestaltung ermöglicht es, dass von dem Rohr in dem Bereich, in dem es einer erhöhten Temperatur ausgesetzt ist, d.h. am Düsenkopf, Wärme an das Gehäuse abgeleitet werden kann, ansonsten aber wegen eines zwischen dem Rohr und dem Gehäuse ausgebildeten Freiraums keine Wärme von dem Gehäuse auf das Rohr übertragen werden kann.

Vorteilhaft ist an dem einströmseitigen Ende des in dem Gehäuse geführten Rohrs eine Anschlussaufnahme für den Leitungsanschluss an eine Harnstofflösungsleitung befestigt. Diese Anschlussaufnahme kann beispielsweise mit dem Rohr verschweißt sein. Besonders vorteilhaft ist die Anschlussaufnahme hülsenförmig ausgebildet und zur Aufnahme eines Filters vorgesehen. So kann die Anschlussaufnahme einen zylindrischen Hohlraum aufweisen, in den der Leitungsanschluss einschraubbar ist, wobei zwischen einem Boden der Anschlussaufnahme, an dem das Rohr befestigt ist, und dem Leitungsanschluss ein Hohlraum verbleibt, in dem ein Filter zum Auffangen eventueller Verunreinigungen der Harnstofflösung angeordnet ist. Durch Ausschrauben des Leitungsanschlusses aus der Anschlussaufnahme kann der Filter bei dieser Ausbildung ggf. in einfacher Weise entnommen und ausgetauscht werden.

An der Aufnahme für die Einspritzdüse ist besonders bevorzugt ein die Durchbrechung der Abgasleitung überdeckender Bereich ausgehend von der Abgasleitung konkav gewölbt ausgebildet. Dies ist insofern vorteilhaft, als es diese Ausgestaltung bei entsprechender Ausbildung des Düsenkopfes der Einspritzdüse ermöglicht, die Harnstofflösung fein verteilt im Wesentlichen über den gesamten Querschnitt der Abgasleitung in die Abgasleitung auszutragen, da die Harnstofflösungsstrahlen in dem gewölbten Bereich der Aufnahme schon entsprechend breit aufgefächert werden können.

Um eine solche Aufföcherung der Harnstofflösungsstrahlen zu erreichen, kann der Düsenkopf der Einspritzdüse vorteilhaft mindestens zwei Austrittskanäle aufweisen, die derart zueinander abgewinkelt sind, dass sich die Mittelachsen der Austrittskanäle außerhalb der Einspritzdüse kreuzen. Diese Ausgestaltung des Düsenkopfs bewirkt eine Kollision der durch die Austrittskanäle strömenden Harnstofflösungsstrahlen, die letztendlich zu einer breiten und feinen Verteilung der Harnstofflösung in der Abgasleitung führt. In dieser Hinsicht lassen sich besonders gute Ergebnisse erzielen, wenn, wie es bevorzugt vorgesehen ist, der Abstand des Kreuzungspunkts der Mittelachsen der Austrittskanäle von der Einspritzdüse kleiner als der Durchmesser eines Austrittskanals ist. Dies hat zur Folge, dass die durch die Austrittskanäle strömenden Harnlösungsstrahlen zum Teil bereits innerhalb des Düsenkopfes kollidieren, der hierzu an seiner Außenseite zweckmäßigerweise eine muldenförmige Ausnehmung aufweist, in der die Austrittskanäle gemeinsam münden.

Eine gute Anströmung der an dem Düsenkopf ausgebildeten Austrittskanäle kann vorteilhaft dadurch erreicht werden, dass an dem abströmseitigen Ende des Rohrs, das an den Düsenkopf angrenzt, an dem Innendurchmesser eine Fase ausgebildet ist, so dass sich der Innenquerschnitt des Rohrs in Richtung des Düsenkopfs kontinuierlich vergrößert.

Bei dem Verfahren zur Montage der erfindungsgemäßen Einspritzdüse wird das Gehäuse lose über das Rohr gesteckt. Anschließend wird ein den Düsenkopf bifdendes Bauteil an das Rohr geschweißt. Dies ist insofern vorteilhaft als das Gehäuse direkt oder indirekt zwischen dem Rohr und dem Bauteil, das Teil des Düsenkopfs der Einspritzdüse bildet, festgelegt wird, ohne das Gehäuse an dem Rohr oder dem Bauteil befestigen zu müssen. Entsprechend schnell und einfach gestaltet sich die Montage der erfindungsgemäßen Einspritzdüse. Bei einer Ausgestaltung der Einspritzdüse, bei der sich eine Schraubenfeder zwischen dem den Düsenkopf bildenden Bauteil und einem an dem Gehäuse verschiebbar angeordneten Ringelement abstützt, können auch das Ringelement und die Schraubenfeder lose über das Gehäuse gesteckt werden, wobei sie zwischen dem Gehäuse und dem Bauteil festgelegt werden ohne sie einzeln befestigen zu müssen.

Nachfolgend wird die erfindungsgemäße Vorrichtung zum Austrag von Harnstofflösung in eine Abgasleitung anhand der in der Zeichnung dargestellten Ausführungsbeispiele näher erläutert. In der Zeichnung zeigt:
- Fig. 1: in einer Seitenansicht eine Einspritzdüse in einer ersten Ausgestaltung,
- Fig. 2: die Einspritzdüse gemäß Fig. 1 in einem Schnitt entlang der Linie II-II in Fig. 1,
- Fig. 3: die Einzelheit X in Fig. 2 in vergrößerter Darstellung,
- Fig. 4: den Düsenkopf der Einspritzdüse nach Fig. 1 als Einzelheit Y aus Fig. 2 in vergrößerter Darstellung,
- Fig. 5: in teilgeschnittener Ansicht die Einspritzdüse nach Fig. 1, angeordnet in einer an einer Abgasleitung angeordneten Aufnahme.
- Fig. 6: in einer Seitenansicht eine Einspritzdüse in einer zweiten Ausgestaltung,
- Fig. 7: in einer Seitenansicht eine Einspritzdüse in einer dritten Ausgestaltung und
- Fig. 8: in teilgeschnittener Ansicht die Einspritzdüse nach Fig. 7, angeordnet in einer an einer Abgasleitung angeordneten Aufnahme.

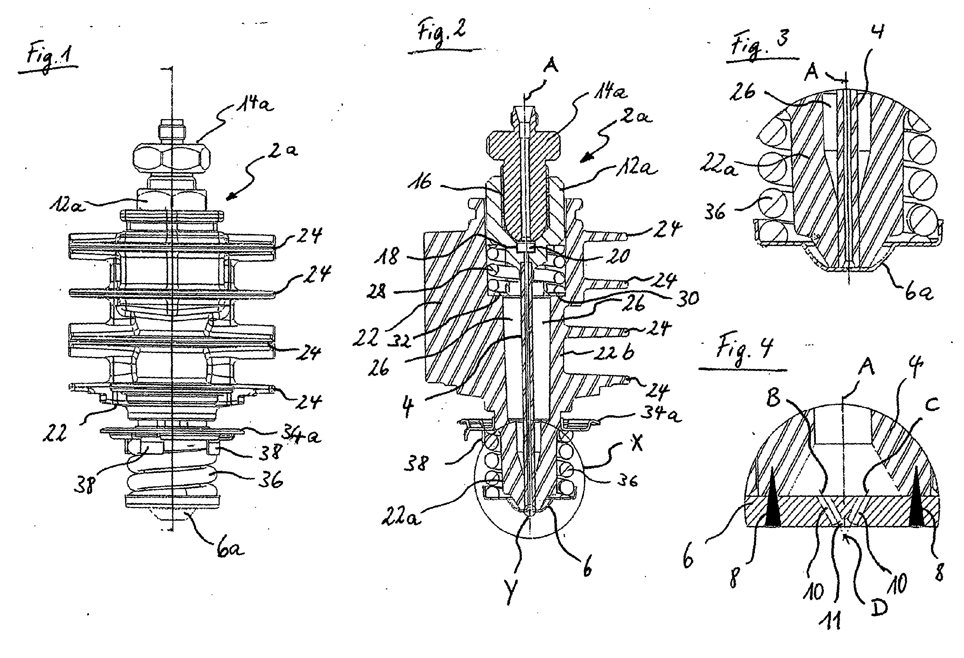

Bei allen in der Zeichnung dargestellten Ausführungsbeispielen weist die Einspritzdüse 2a, 2b, 2c ein Rohr 4 auf, das einen Strömungskanal zu einem an einem Ende des Rohrs 4 gebildeten Düsenkopf (Fig. 4) bildet, bei dem an einer Stirnseite des Rohres 4 ein Bauteil 6a bzw. 6b anliegt und dort mittels Laserschweißung 8 ringförmig mit der Stirnseite des Rohres 4 verschweißt ist (Fig. 4). An dem Bauteil 6a, 6b sind zwei Austrittskanäle 10 ausgebildet, die derart schräg zu einer Längsachse A des Rohrs 4 ausgerichtet sind, dass sie an einer von dem Rohr 4 abgewandten Seite des Bauteils 6a, 6b gemeinsam in,einer dort ausgebildeten Ausnehmung 11 münden, wobei die Mittelachsen B und C der beiden Austrittskanäle 10 einander in einem Punkt D außerhalb der Einspritzdüse 2 kreuzen. Um eine gute Anströmung der Austrittskanäle 10 des Bauteils 6a, 6b zu gewährleisten, ist das an das Bauteil 6a, 6b angrenzende Ende des Rohres 4 innen angefast ausgebildet.

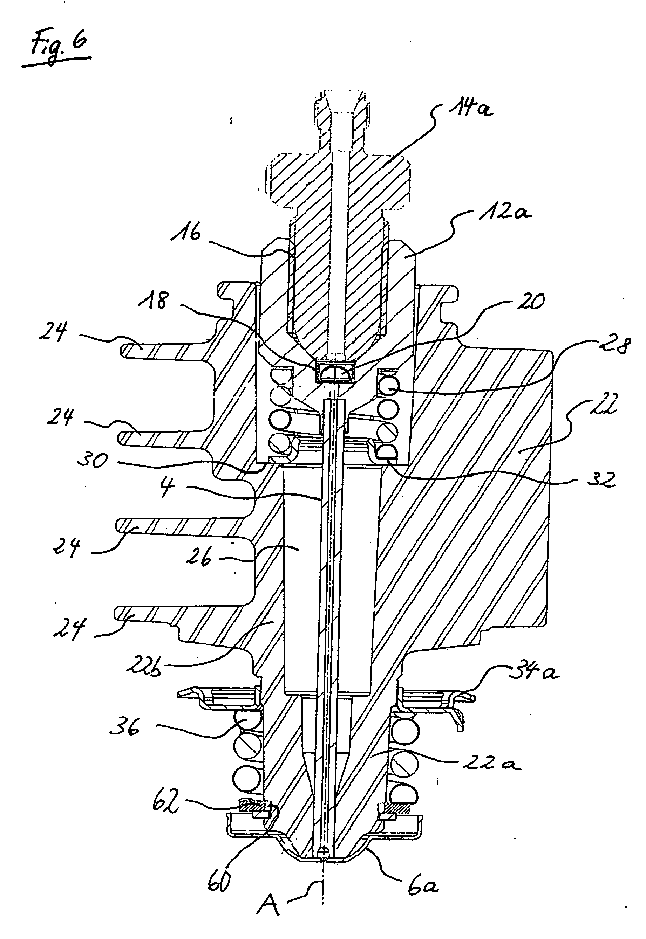

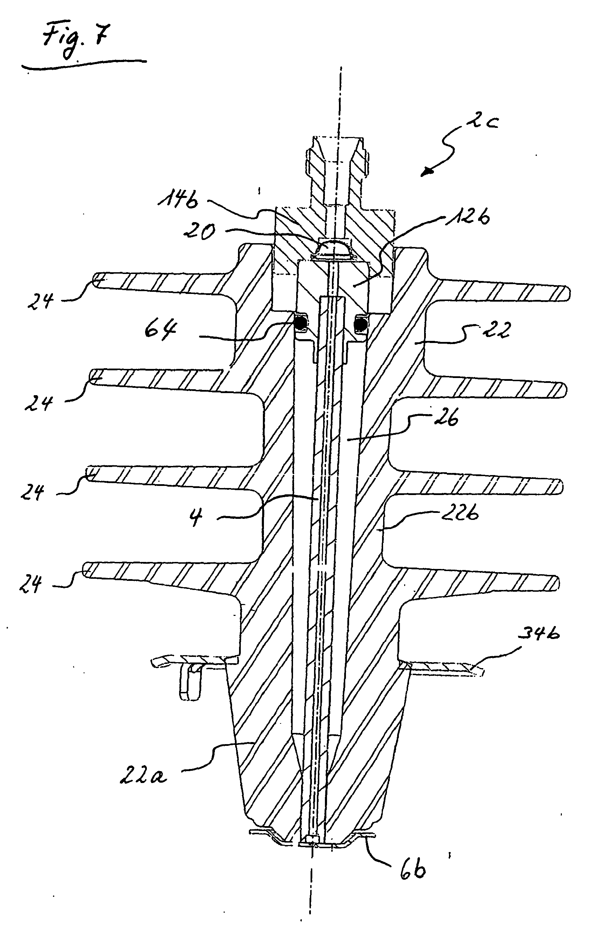

An dem von dem Düsenkopf abgewandten Ende des Rohrs 4 ist eine Anschlussaufnahme 12a bei den Einspritzdüsen 2a und 2b bzw. eine Anschlussaufnahme 12b für die Einspritzdüse 2c für einen Leitungsanschluss 14a (Einspritzdüsen 2a und 2b) bzw. für einen Leitungsanschluss 14b (Einspritzdüse 2c) an eine nicht dargestellte Harnstofflösungsleitung befestigt. Bei den in den Fig. 2 und 6 dargestellten Einspritzdüsen 2a und 2b weist die Anschlussaufnahmen 12a einen deutlich größeren Außendurchmesser als das Rohr 4 auf und ist hülsenförmig hohl ausgebildet, wobei der so in der Anschlussaufnahme 12a ausgebildete Hohlraum ausgehend von einer Öffnung zur Aufnahme des Leitungsanschlusses 14a in Richtung des Düsenkopfes zunächst einen zylindrischen Abschnitt 16 bildet und sich anschließend konisch zu einem ebenfalls zylindrischen Abschnitt 18 verjüngt. In dem Abschnitt 16 ist der Leitungsanschluss 14 mit der Anschlussaufnahme 12a verschraubt, während in dem Abschnitt 18 ein Filter 20 zum Aufhalten von Verunreinigungen in der Harnstofflösung angeordnet ist. Bei der in Fig. 7 dargestellten Einspritzdüse 2c ist die Anschlussaufnahme 12b im Wesentlichen zylindrisch ausgebildet. An dem Leitungsanschluss 14b ist an dem in Einbaulage dem Düsenkopf zugewandten Ende ein Hohlraum ausgebildet. Dieser Hohlraum weist einen ersten zylindrischen Abschnitt auf, in den die Anschlussaufnahme 12b eingreift. An den ersten zylindrischen Abschnitt des Hohlraums des Leitungsanschlusses 14b schließt sich ein zweiter zylindrischer Abschnitt mit einem geringeren Innendruchmesser an, in dem ein Filter 20 angeordnet ist.

Das Rohr 4 ist bei allen Einspritzdüsen 2a, 2b und 2c zentral in einem Gehäuse 22 angeordnet. Da die Einspritzdüsen 2a, 2b und 2c in unmittelbarer Nähe an einer Abgasleitung 40 angeordnet sind, worauf weiter unten noch detaillierter eingegangen wird, sind sie vergleichsweise hohen Temperaturen ausgesetzt. Das Gehäuse 22 ist daher speziell zur Abfuhr der in die Einspritzdüsen 2a, 2b und 2c eingeleiteten Wärme ausgebildet und bildet einen Kühler der diese Wärme an die Umgebungsluft der Einspritzdüsen 2a, 2b und 2c ableitet. Das Gehäuse 22 weist direkt an den Düsenkopf anschließend einen ersten konisch ausgebildeten Abschnitt 22a auf, an dessen dem Bauteil 6a zugewandten Ende eine kegelstumpfförmige Verjüngung ausgebildet ist. Der Abschnitt 22a des Gehäuses 22 geht in einen Abschnitt 22b über, an dem vier radial nach außen kragende Kühlrippen 24 ausgebildet sind.

Das Rohr 4 ist bei allen Einspritzdüsen 2a, 2b und 2c in dem Gehäuse 22 in einem darin ausgebildeten Führungskanal 26 beweglich geführt. Dieser Führungskanal 26 weist dort, wo der Düsenkopf ausgebildet ist, zunächst einen mit dem Außendurchmesser des Rohrs 4 korrespondierenden Innendurchmesser auf, der sich bei den Einspritzdüsen 2a und 2b dann aber in mehreren Stufen derart vergrößert, dass er im Bereich des Abschnitts 22b des Gehäuses 22 in etwa mit dem Außendurchmesser der Anschlussaufnahme 12 korrespondiert. In diesem Bereich ist die Anschlussaufnahme 12a und das daran befestigte Rohr 4 bei den Einspritzdüsen 2a und 2b auf einer Schraubendruckfeder 28 federnd gelagert, die sich auf einer auf einem Absatz 30 des Führungskanals 26 aufliegenden Unterlegscheibe 32 abstützt, während die Anschlussaufnahme 12b bei der Einspritzdüse 2c ohne auf einem Absatz aufzuliegen in den Führungskanal 26 eingreift, wobei sie mittels eines Dichtrings 64 gegen die Wandung des Führungskanals 26 abgedichtet ist.

An der Außenseite des Gehäuses 22 ist bei den Einspritzdüsen 2a und 2b im Bereich des Abschnitt 22a und beabstandet von dem Düsenkopf ein Ringelement 34a verschiebbar angeordnet. Dieses Ringelement 34a ist als Stanzteil ausgebildet und erstreckt sich ausgehend von der Außenseite des Gehäuses 22 radial nach außen. Da sich an dem Ringelement 34a eine Stahlfeder in Form der Schraubenfeder 36 abstützt, ist das Ringelement 34a aus einem zumindest gleich harten Material wie die Schraubenfeder 36, vorzugsweise aus Stahl, ausgebildet, um beim Betrieb der erfindungsgemäßen Vorrichtung zu verhindern, dass sich die Schraubenfeder 36 in das Ringelement 34a einarbeitet. Das Bauteil 6a weist einen kalottenförmig abgestumpften Abschnitt auf, der außenseitig der kegelstumpfförmigen Verjüngung des Abschnitts 22a des Gehäuses 22 angeordnet ist. Ausgehend von dem kalottenförmig abgestumpften Abschnitt, an dem das Bauteil 6a an dem Rohr 4 verschweißt ist, erstreckt sich das Bauteil 6a radial über den Außendurchmesser des Abschnitts 22a des Gehäuses 22 nach außen. Dieser sich radial über den Außenumfang des Abschnitts 22a erstreckende Abschnitt des Bauteils 6a bildet bei der in den Fig. 1 bis 3 dargestellten Einspritzdüse 2a ebenso wie die dem Bauteil 6a zugewandte Flachseite des Ringelements 34a jeweils eine Anlagefläche für eine Schraubenfeder 36, die den Abschnitt 22a des Gehäuses 22 umgebend angeordnet ist. Die Schraubenfeder 36 wird durch in Richtung des Bauteils 6a abgewinkelte Abschnitte 38 des Bauteils 6a relativ zu der Längsachse A des Rohres 4 zentriert.

Im Gegensatz zu der Einspritzdüse 2a stützt sich die Schraubenfeder 36 bei der in der Fig. 6 dargestellten Einspritzdüse 2b nicht zwischen dem Ringelement 34a und dem Bauteil 6a ab. Stattdessen ist an dem, dem Bauteil 6a zugewandten Ende des Abschnitts 22a des Gehäuses 22 umfänglich eine Nut 60 ausgebildet, in der ein Sicherungsring 62 verklemmt ist. Zwischen diesem Sicherungsring 60 und dem Ringelement 34a ist die Schraubenfeder 36 angeordnet.

Im Gegensatz zu den Einspritzdüsen 2a und 2b ist bei der Einspritzdüse 2c keine Schraubenfeder vorgesehen, die sich zwischen dem Ringelement 34b und dem Bauteil 6b abstützt. Stattdessen bildet das Ringelement 34b selbst ein Federelement und ist zu diesem Zweck in Art einer Tellerfeder als eine in einem gewissen Bereich elastisch verformbare leicht kegelige Ringschale ausgebildet, die an dem Gehäuse 22 an dem Übergang von dem Abschnitt 22a in den Abschnitt 22b befestigt ist.

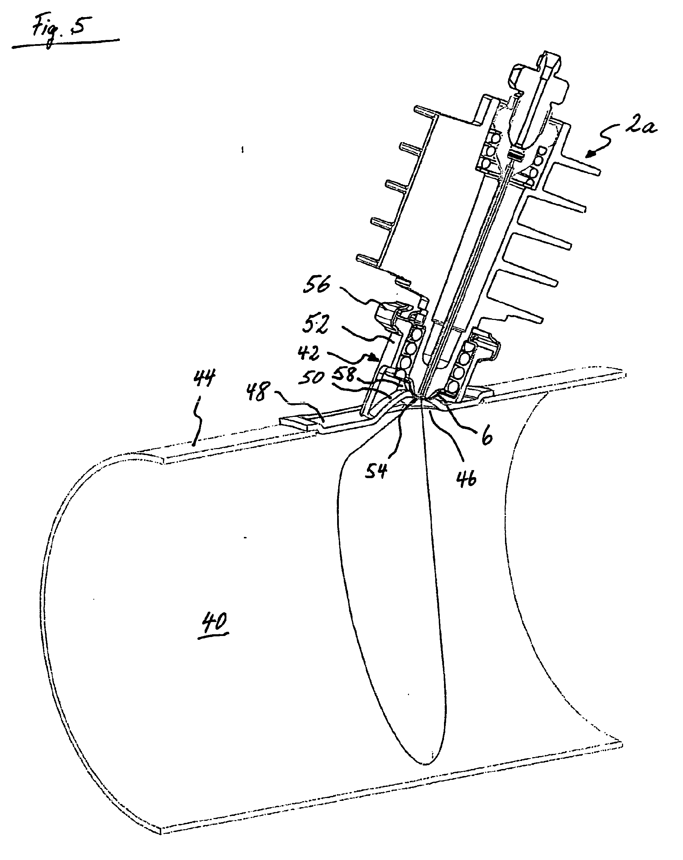

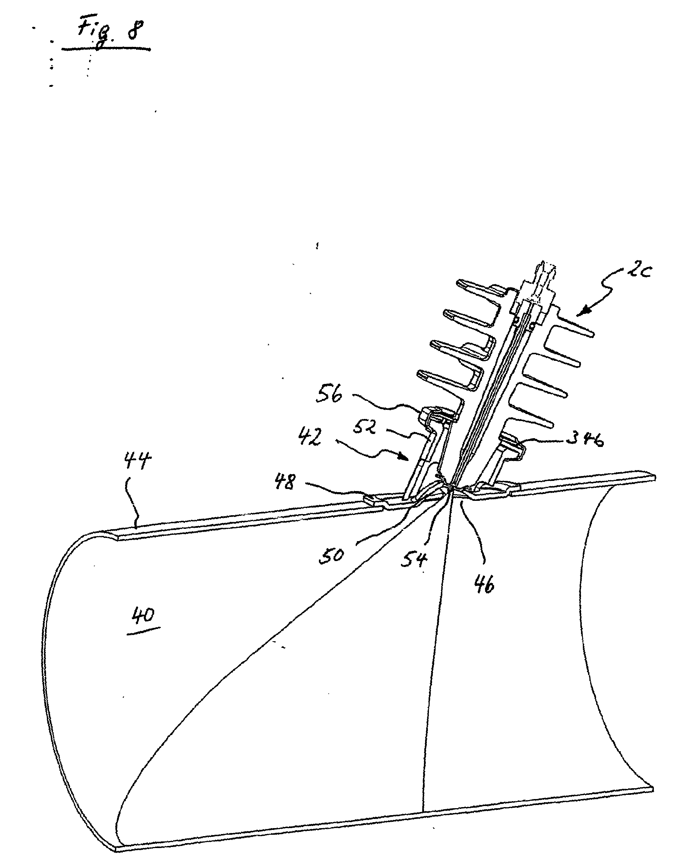

Die Fig. 5 und 8 zeigen die Einspritzdüse 2a bzw. 2c in einer an einer Abgasleitung 40 angeordneten Aufnahme 42. An der Wandung 44 der Abgasleitung 40 ist eine Durchbrechung 46 ausgebildet. Ein im Wesentlichen sattelförmiges Basisbauteil 48 der Aufnahme 42, das mit der Umfangskontur der Abgasleitung 40 korrespondiert, ist außenseitig der Wandung 44 der Abgasleitung derart angeordnet, dass es den Rand der Durchbrechung 46 überlappt. Das Basisbauteil 48 ist mit der Abgasleitung 40 gasdicht verschweißt.

Direkt außenseitig der Durchbrechung 46 weist das Basisbauteil 48 eine ausgehend von dem Inneren der Abgasleitung 40 konkave Wölbung 50 auf. Die Wölbung 50 ist von einem Rohrstück 52 umgeben. An dem freien Ende des Rohrstücks 52 ist ein Flansch ausgebildet. Das Rohrstück 52 dient zur Aufnahme des Düsenkopfs der Einspritzdüse 2 und ist derart schräg zur Längsausdehnung der Abgasleitung 40 ausgerichtet, dass der von den Einspritzdüsen 2a, 2b und 2c ausgebrachte Harnstoff in Strömungsrichtung des Abgasstroms in die Abgasleitung 40 strömt, wodurch der Harnstoff in der Abgasleitung 40 in geeigneter Weise von dem Abgasstrom erfasst werden kann.

Beim Positionieren der Einspritzdüse 2a, 2b und 2c wird jeweils der kalottenförmig abgeflacht ausgebildete Abschnitt der Bauteile 6a und 6b an denen die Austrittskanäle 10 ausgebildet sind, an dem angefasst ausgebildeten Rand einer an der Wölbung 50 vorgesehenen Durchbrechung 54 dicht zur Anlage gebracht. Dies geschieht bei den Einspritzdüsen 2a und 2b dadurch, dass das an dem Gehäuse 22 der Einspritzdüse 2 befestigte Ringelement 34a an der Stirnseite des Flansches des Rohrstücks 52 angelegt wird und mit einer Schelle 56, die den Flansch und das Ringelement 34a nicht nur umfänglich sondern auch an deren voneinander abgewandten Flachseiten umgreift, an dem Flansch formschlüssig festgelegt wird. Hierdurch wird die Schraubenfeder 36 der Einspritzdüse 2 gespannt und drückt das Bauteil 6a gegen den Rand der Durchbrechung 54. Die kraftschlüssige Anlage des Bauteils 6b an der Durchbrechung 54 erfolgt bei der Positionierung der Einspritzdüse 2c, indem durch das Anlegen und Befestigen der Schelle 56 das Ringelement 34b derart elastisch verformt wird, dass die Einspritzdüse unter Spannung des Ringelements 34b an den Rand der Durchbrechung 56 gerückt wird. Um die Wärme im Bereich des Düsenkopfs ableiten zu können, weist das Rohrstück 52 über seinen Umfang verteilt vier Durchbrechungen 58 auf.

### Bezugszeichenliste

- 2 -: Einspritzdüse
- 4 -: Rohr
- 6a, 6b -: Bauteil
- 8 -: Laserschweißung
- 10 -: Austrittskanal
- 11 -: Ausnehmung
- 12 -: Anschlussaufnahme
- 14 -: Leitungsanschluss
- 16 -: Abschnitt
- 18 -: Abschnitt
- 20 -: Filter
- 22 -: Gehäuse
- 22a, 22b -: Abschnitt
- 24 -: Kühlrippe
- 26 -: Führungskanal
- 28 -: Schraubenfeder
- 30 -: Absatz
- 32 -: Unterlegscheibe
- 34a, 34b -: Ringelement
- 36 -: Schraubenfeder
- 38 -: Abschnitt
- 40 -: Abgasleitung
- 42 -: Aufnahme
- 44 -: Wandung
- 46 -: Durchbrechung
- 48 -: Basisbauteil
- 50 -: Wölbung
- 52 -: Rohrstück
- 54 -: Durchbrechung
- 56 -: Schelle
- 58 -: Durchbrechung
- 60 -: Nut
- 62 -: Sicherungsring
- 64 -: Dichtring

- A -: Längsachse
- B -: Mittelachse
- C -: Mittelachse
- D -: Punkt
- X -: Einzelheit
- Y -: Einzelheit

## Patentansprüche

1. Vorrichtung zum Austrag von Harnstofflösung in eine Abgasleitung mit einer Einspritzdüse (2), die einen Leitungsanschluss (14) für die Zufuhr von Harnstofflösung und einen damit leitungsverbundenen Düsenkopf aufweist, mit dem die Harnstofflösung fein verteilt einem Abgasstrom zuführbar ist, mit einer an der Außenseite der Abgasleitung angeordneten Aufnahme (42), welche eine Durchbrechung (46) in der Abgasleitungswandung (44) umgibt und die zur dichten Anlage des Düsenkopfs und zur lösbaren Befestigung der Einspritzdüse (2) ausgebildet ist, **dadurch gekennzeichnet, dass** Federmittel (34b, 36) zur kraftschlüssigen Anlage des Düsenkopfs in der Aufnahme (42) vorgesehen sind.

2. Vorrichtung nach Anspruch 1, bei der die Federmittel einen Teil der Einspritzdüse (2) bilden.

3. Vorrichtung nach einem der vorangehenden Ansprüche, bei der sich eine Feder (36) zwischen einem an dem Gehäuse (22) verschiebbar angeordneten Anlageteil und einer an dem Düsenkopf ausgebildeten Anlagefläche abstützt.

4. Vorrichtung nach Anspruch 3, bei der die Einspritzdüse (2) ein zentrales, in einem Gehäuse (22) begrenzt beweglich geführtes Rohr (4) aufweist, an dessen einem Rohrende der Düsenkopf angeordnet ist, wobei sich die Feder (36) zwischen dem Düsenkopf und dem Anlageteil abstützt und wobei das Anlageteil formschlüssig in oder an der Aufnahme (42) befestigbar ist.

5. Vorrichtung nach Anspruch 4, bei der der Düsenkopf ein Bauteil (6a) mit zumindest einem daran ausgebildeten Auslasskanal (10) aufweist, welches sich über den Außendurchmesser des Gehäuses (22) erstreckt und die Anlagefläche für die Feder (36) bildet.

6. Vorrichtung nach einem der Ansprüche 4 oder 5, bei der das Anlageteil von einem im Wesentlichen flachen Ringelement (34a) gebildet wird.

7. Vorrichtung nach einem der Ansprüche 1 oder 2, bei der sich eine Feder (36) zwischen dem Anlageteil und einer an der Einspritzdüse feststehend ausgebildeten Anlagefläche abstützt.

8. Vorrichtung nach einem der vorangehenden Ansprüche, bei der das Gehäuse (22) der Einspritzdüse (2) bei Anordnung in der Aufnahme (42) an dem Düsenkopf anliegt.

9. Vorrichtung nach Anspruch 8, bei der eine Feder (28) zum kraftschlüssigen Anlegen des Gehäuses (22) an dem Düsenkopf vorgesehen ist.

10. Vorrichtung nach Anspruch 9, bei der die Feder (28) in dem Gehäuse (22) angeordnet ist.

11. Vorrichtung nach einem der Ansprüche 1 oder 2, bei der sich ein Federelement an dem Gehäuse (22) und der Aufnahme (42) abstützt.

12. Vorrichtung nach Anspruch 11, bei der das Ringelement federnd ausgebildet ist und an dem Gehäuse festgelegt ist.

13. Vorrichtung nach einem der Ansprüche 6 bis 12, bei der an der Aufnahme (42) ein Flansch ausgebildet ist, an dem das Ringelement (34a, 34b) zur Anlage bringbar ist, wobei das Ringelement (34a, 34b) und der Flansch miteinander mittels einer das Ringelement (34a, 34b) und den Flansch umgreifenden Schelle (56) befestigbar sind.

14. Vorrichtung nach einem der Ansprüche 4 bis 13, bei der das Rohr (4) mit dem Gehäuse (22) im Bereich des Düsenkopfs wärmeleitend verbunden ist und im Übrigen von dem Gehäuse (22) beabstandet ist.

15. Vorrichtung nach einem der Ansprüche 4 bis 14, bei der an dem einströmseitigen Ende des in dem Gehäuse (22) geführten Rohrs (4) eine Anschlussaufnahme (12) für den Leitungsanschluss (14) an eine Harnstofflösungsleitung befestigt ist.

16. Vorrichtung nach Anspruch 15, bei dem die Anschlussaufnahme (12) hülsenförmig ausgebildet ist und zur Aufnahme eines Filters (20) vorgesehen ist.

17. Vorrichtung nach einem der Ansprüche 15 oder 16, bei dem in dem Gehäuse (22) der Einspritzdüse (2) eine absatzförmige Erweiterung zur Anordnung der Anschlussaufnahme (12) ausgebildet ist, wobei zwischen der Anschlussaufnahme(12) und dem Absatz (30) der Erweiterung die das Rohr (4) umgebende Feder (28) angeordnet ist.

18. Vorrichtung nach einem der vorangehenden Ansprüche, bei dem ein die Durchbrechung (46) der Abgasleitung (40) überdeckender Bereich der Aufnahme (42) ausgehend von der Abgasleitung (40) konkav gewölbt ausgebildet ist.

19. Verfahren zur Montage einer Einspritzdüse (2) mit zumindest einem der in den Ansprüchen 1 bis 18 angegebenen Merkmale, **dadurch gekennzeichnet, dass** zumindest das Gehäuse (22) lose über das Rohr (4) gesteckt wird und anschließend ein einen Düsenkopf bildendes Bauteil (6a, 6b) an das Rohr (4) geschweißt wird.

## Claims

1. A device for the discharge of urea solution into an exhaust gas conduit, with an injection nozzle (2) which comprises a conduit connection (14) for the supply of urea solution, and a nozzle head which is conductively connected thereto and with which the urea solution may be supplied to an exhaust gas flow in a finely distributed manner, with a receiver (42) which is arranged on the outer side of the exhaust gas conduit, surrounds an opening (46) in the exhaust gas conduit wall (44) and is designed for the sealed bearing-contact of the nozzle head and for the releasable fastening of the injection nozzle (2), **characterised in that** spring means (34b, 36) for the non-positive fit bearing-contact of the nozzle head in the receiver (42) are provided.

2. A device according to claim 1, with which the spring means form a part of the injection nozzle (2).

3. A device according to one of the preceding claims, with which a spring (36) is supported between a bearing-contact part arranged on the housing (22) in a displaceable manner, and a bearing-contact surface formed on the nozzle head.

4. A device according to claim 3, with which the injection nozzle (2) comprises a central tube (4) which is movably guided in a limited manner in a housing (22), and on whose one tube end the nozzle head is arranged, wherein the spring (36) is supported between the nozzle head and the bearing-contact part, and wherein the bearing-contact part may be fastened in or on the receiver (42) with a positive fit.

5. A device according to claim 4, with which the nozzle head comprises a component (6a) with at least one outlet channel (10) which is formed thereon and which extends over the outer diameter of the housing (22) and forms the bearing-contact surface for the spring (36).

6. A device according to one of the claims 4 or 5, with which the bearing-contact part is formed by an essentially flat ring element (34a).

7. A device according to one of the claims 1 or 2, with which a spring (36) is supported between the bearing-contact part and a bearing-contact surface which is formed on the injection nozzle in a stationary manner.

8. A device according to one of the preceding claims, with which the housing (22) of the injection nozzle (2) bears on the nozzle head, given an arrangement in the receiver (42).

9. A device according to claim 8, with which a spring (28) is provided for the non-positive-fit bearing-contact of the housing (22) on the nozzle head.

10. A device according to claim 9, with which the spring (28) is arranged in the housing (22).

11. A device according to one of the claims 1 or 2, with which a spring element is supported on the housing (22) and the receiver (42).

12. A device according to claim 11, with which the ring element is designed in a resilient manner and is fastened on the housing.

13. A device according to one of the claims 6 to 12, with which a flange is formed on the receiver (42), on which flange the ring element (34a, 34b) may be brought into bearing contact, wherein the ring element (34a, 34b) and the flange may be fastened to one another by way of a clip (56) engaging around the ring element (34a, 34b) and the flange.

14. A device according to one of the claims 4 to 13, with which the tube (4) is connected to the housing (22) in a heat-conducting manner in the region of the nozzle head, and is otherwise distanced to the housing (22).

15. A device according to one of the claims 4 to 14, with which a connection receiver (12) for the conduit connection (14), is fastened to a urea solution conduit, at the inflow-side end of the tube (4) led in the housing (22).

16. A device according to claim 15, with which the connection receiver (12) is designed in a sleeve-like manner and is provided for receiving a filter (20).

17. A device according to one of the claims 15 or 16, with which a shoulder-like widening for arranging the connection receiver (12), is formed in the housing (22) of the injection nozzle (2), wherein the spring (28) surrounding the tube (4) is arranged between the connection receiver (12) and the shoulder (30) of the widening.

18. A device according to one of the preceding claims, with which a region of the receiver (42) which covers the opening (46) of the exhaust gas conduit (40), is concavely curved proceeding from the exhaust gas conduit (40).

19. A method for assembly of an injection nozzle (2) with at least one of the features specified in the claims 1 to 18, **characterised in that** at least the housing (22) is stuck over the tube (4) in a loose manner, and subsequently a component (6a, 6b) forming the nozzle head is welded to the tube (4).

## Revendications

1. Dispositif pour introduire une solution d'urée dans une conduite de gaz d'échappement, comprenant une buse d'injection (2) pourvue d'un raccord de conduite (14) pour l'alimentation de la solution d'urée et d'une tête de buse reliée par conduite à celui-ci, avec laquelle la solution d'urée finement divisée peut être amenée dans un flux de gaz d'échappement, et comprenant un logement (42), disposé sur la face extérieure de la conduite de gaz d'échappement, qui entoure une ouverture (46) ménagée dans la paroi (44) de la conduite de gaz d'échappement et est conçu pour l'application étanche de la tête de buse et pour la fixation amovible de la buse d'injection (2), **caractérisé en ce que** sont prévus des moyens de ressort (34b, 36) pour l'application par adhérence de la tête de buse dans le logement (42).

2. Dispositif selon la revendication 1, dans lequel les moyens de ressort forment une partie de la buse d'injection (2).

3. Dispositif selon l'une des revendications précédentes, dans lequel un ressort (36) vient reposer entre une pièce d'appui montée à coulissement sur le carter (22) et une surface d'appui formée au niveau de la tête de buse.

4. Dispositif selon la revendication 3, dans lequel la buse d'injection (2) présente un tube central (4) guidé en déplacement limité dans un carter (22), à une extrémité duquel est disposée la tête de buse, le ressort (36) venant reposer entre la tête de buse et la pièce d'appui, et la pièce d'appui pouvant être fixée par engagement mécanique dans ou sur le logement (42).

5. Dispositif selon la revendication 4, dans lequel la tête de buse présente un élément (6a) comportant au moins un canal de sortie (10) formé sur celui-ci, qui s'étend sur le diamètre extérieur du carter (22) et forme la surface d'appui du ressort (36).

6. Dispositif selon l'une des revendications 4 ou 5, dans lequel la pièce d'appui est constituée d'un élément annulaire (34a) sensiblement plat.

7. Dispositif selon l'une des revendications 1 ou 2, dans lequel un ressort (36) vient reposer entre la pièce d'appui et une surface d'appui réalisée de manière fixe au niveau de la buse d'injection.

8. Dispositif selon l'une des revendications précédentes, dans lequel le carter (22) de la buse d'injection (2), lors du positionnement dans le logement (42), vient prendre appui contre la tête de buse.

9. Dispositif selon la revendication 8, dans lequel est prévu un ressort (28) pour appliquer le carter (22) contre la tête de buse par adhérence.

10. Dispositif selon la revendication 9, dans lequel le ressort (28) est disposé dans le carter (22).

11. Dispositif selon l'une des revendications 1 ou 2, dans lequel un élément ressort vient en appui contre le carter (22) et le logement (42).

12. Dispositif selon la revendication 11, dans lequel l'élément annulaire est conçu de manière élastique et est fixé au niveau du carter.

13. Dispositif selon l'une des revendications 6 à 12, dans lequel est réalisée sur le logement (42) une bride contre laquelle l'élément annulaire (34a, 34b) peut être appliqué, l'élément annulaire (34a, 34b) et la bride pouvant être fixés l'un à l'autre au moyen d'un collier (56) entourant l'élément annulaire (34a, 34b) et la bride.

14. Dispositif selon l'une des revendications 4 à 13, dans lequel le tube (4) est raccordé de manière thermoconductrice au carter (22) dans la région de la tête de buse et est pour le reste espacé du carter (22).

15. Dispositif selon l'une des revendications 4 à 14, dans lequel, à l'extrémité côté flux entrant du tube (4) guidé dans le carter (22), un siège de raccord (12) destiné à recevoir le raccord de conduite (14) est fixé à une conduite de solution d'urée.

16. Dispositif selon la revendication 15, dans lequel le siège de raccord (12) est réalisé en forme de manchon et est prévu pour recevoir un filtre (20).

17. Dispositif selon l'une des revendications 15 ou 16, dans lequel une extension en forme d'épaulement pour l'agencement du siège de raccord (12) est réalisée dans le carter (22) de la buse d'injection (2), le ressort (28) entourant le tube (4) étant disposé entre le siège de raccord (12) et l'épaulement (30) de l'extension.

18. Dispositif selon l'une des revendications précédentes, dans lequel une région du logement (42) recouvrant l'ouverture (46) de la conduite de gaz d'échappement (40) est conçue de façon concave à partir de la conduite de gaz d'échappement (40).

19. Procédé de montage d'une buse d'injection (2) présentant au moins l'une des caractéristiques indiquées dans les revendications 1 à 18, **caractérisé en ce qu'**au moins le carter (22) est emboîté de manière lâche sur le tube (4), puis un élément (6a, 6b) formant une tête de buse est soudé au niveau du tube (4).
